Europäisches Patentamt

European Patent Office

Office européen des brevets

(19)

(11) Publication number: **0 061 744**
**A2**

(12) **EUROPEAN PATENT APPLICATION**

(21) Application number: **82102568.1**

(22) Date of filing: **26.03.82**

(51) Int. Cl.³: **H 05 B 41/29**

(30) Priority: **27.03.81 JP 45213/81**

(43) Date of publication of application:
**06.10.82 Bulletin 82/40**

(84) Designated Contracting States:
**DE FR GB NL**

(71) Applicant: **Toshiba Electric Equipment Corporation**
**1-43, 1-chome, Shibaura**
**Minato-ku Tokyo(JP)**

(72) Inventor: **Inui, Kenichi**
**Toshiba-Shinkoyasu-ryo, 2-14-10 Shinkoyasu**
**Kanagawa-ku Yokohama-shi(JP)**

(74) Representative: **Lehn, Werner, Dipl.-Ing. et al,**
**Hoffmann, Eitle & Partner Patentanwälte**
**Arabellastrasse 4 (Sternhaus)**
**D-8000 München 81(DE)**

(54) **Transistor inverter device.**

(57) In a transistor inverter device, at its start immediately after a power switch (1a) is turned on, an output level of a drive circuit (23) is low. A transistor (43) in a control circuit (41) for its start is conductive and a voltage dividing circuit constituted with resistors (42, 44) operates. An output from a full-wave rectifier (34) is voltage-divided by the resistors (42, 44). The divided voltage is applied to the cathode of Zener diode (36). Such an operation of the control circuit (41) prevents an inverter stopping circuit (33) from erroneously operating at the time of the start of the inverter device.

./...

EP 0 061 744 A2

F I G. 1

- 1 -

## Transistor inverter device

The present invention relates to a transistor inverter device well adaptable particularly for a discharge lamp operating device.

An example of the discharge lamp operating device using a transistor inverter is disclosed in U.S. Patent Application filed on December 28, 1981 based on Japanese Patent Application No. 186081/'80. In the operating device, when the end of the lifetime of the discharge lamp approaches, an abnormal voltage produced in the output transformer of the transistor inverter is detected to intermittently stop the operation of the inverter to cause a flicker in the discharge lamp operation.

Another example of the discharge lamp operating device is disclosed in U.S. Patent No. 4215292. In the operating device, a base current control circuit is provided between a base current drive circuit of a transistor in a transistor inverter circuit and the base of the transistor. The base current control device limits the base current of the transistor during a predetermined period at the start of the discharge lamp operation to limit the output of the inverter device. In this way, the reduction of the lifetime of the discharge lamp due to the flicker of the lamp can be prevented.

There might be an approach in which the techniques of the mentioned U.S. Patent Application and the
U.S. Patent are combined. In this approach, an abnormality is detected by detecting the voltage generated in
the secondary winding of the output transformer of the
transistor inverter device. The voltage generated in
the secondary winding is highest when the inverter has
no load, that is, when the discharge lamp is not operated. The voltage is next high in an abnormal state of
the lamp and at the time of start of the lamp operation.
The voltage is lowest in a normal state of the lamp
operation. The voltages in the abnormal state of the
lamp and at the start of the lamp operation are near or
substantially equal to each other, so that the operating
device possibly erroneously recognizes the start voltage
as the abnormal voltage at the start of the lamp operation after power on and erroneously interrupts the operation of the inverter device.

It is an object of the present invention to provide
a transistor inverter device comprising a circuit for
controlling a base current at the start of operation of
a discharge lamp such as a fluorescent lamp and an
inverter stopping circuit for stopping an inverter at an
appearence of abnormality in the discharge lamp when the
end of the lifetime of the lamp approaches, which
transistor inverter device can prevent the inverter
stopping circuit from erroneously operating at the start
of the operation of the lamp.

The present invention is based on an idea that, by
making use of the fact that an output level of the transistor inverter device is low at the start of the lamp
operation under control of a base current control circuit, the operation of the inverter stopping circuit is
forcibly stopped at the start of the lamp operation on
the basis of a judgement of the output level of the base
current control circuit.

According to the invention, there is provided a transistor inverter device having a power source section, an inverter device for producing a high frequency output through the switching operation of a transistor in response to an output signal from said power source section, a base current control circuit for limiting a base current fed to said transistor during a predetermined period of time after the start of said inverter unit, and an inverter stopping circuit for stopping the operation of said inverter device upon detection of an abnormality in the output of said inverter device, characterized in that the device further comprises a control circuit for stopping the operation of said inverter stopping circuit for a given period of time after the start of said inverter device in response to the output from said inverter device.

This invention can be more fully understood from the following detailed description when taken in conjunction with the accompanying drawings, in which:

Fig. 1 is a circuit diagram of an embodiment of a transistor inverter device according to the present invention; and

Fig. 2 is a circuit diagram of another embodiment of a transistor inverter device according to the present invention.

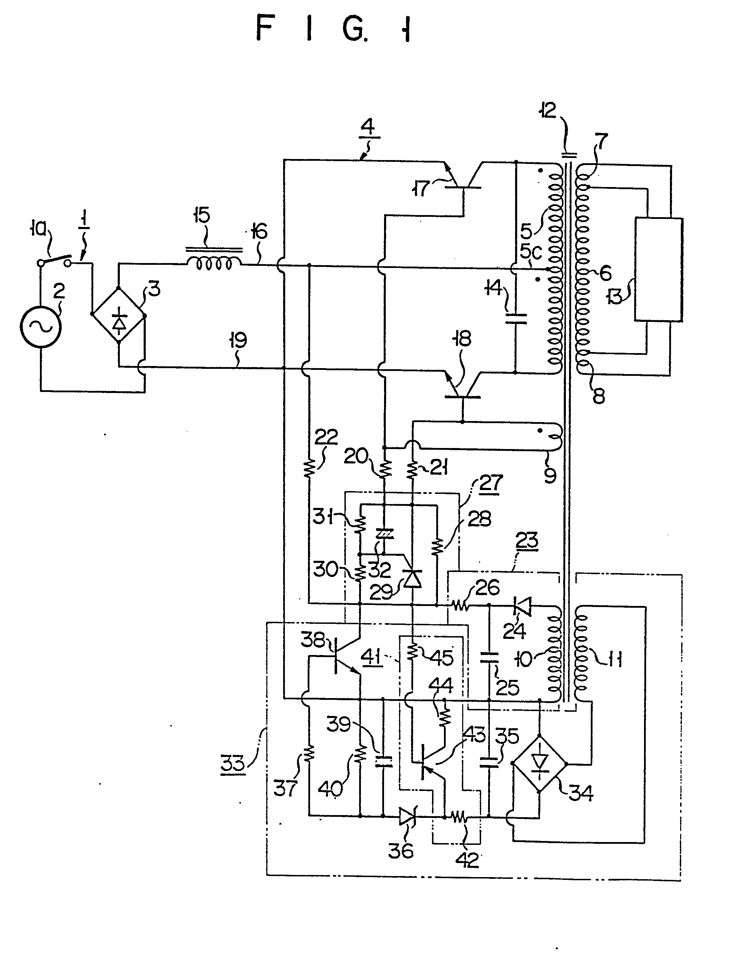

Embodiments of a transistor inverter device according to the present invention will be described referring to the accompanying drawings. In Fig. 1, a power source section 1 comprises a commercial AC power source 2 at 100 V and 50 Hz, for example, an output thereof being supplied to a full-wave rectifier circuit 3 via a power switch 1a where it is rectified to be a pulsating wave voltage. The pulsating voltage from the full-wave rectifier circuit 3 is supplied to an inverter device 4. The inverter device 4 has an output transformer 12 including a primary winding 5, a secondary winding 6, preheater windings 7 and 8, a feedback winding 9, a drive winding 10 and a detecting winding 11. A discharge lamp 13 as a load is connected to the secondary winding 6 and the preheater windings 7 and 8. A resonance capacitor 14 is connected between both ends of the primary winding 5. The center tap 5c of the primary winding 5 is connected to a positive line 16 including a constant current inductance 15. The primary winding 5 is connected at both ends to the collectors of the transistors 17 and 18, and the emitters of the transistors 17 and 18 are connected to a negative line 19.

The base of the transistor 17 is connected to one end of a resistor 20 and one end of the feedback winding 9. The base of the transistor 18 is connected to one end of a resistor 21 and the other end of the winding 9. The center tap 5c of the primary winding 5 is connected to a junction point of the cathode of a diode 24 and one end of a capacitor 25 in a drive circuit 23, through serially connected resistors 22 and 26. The anode of the diode 24 and the other end of the capacitor 25 are connected to the ends of the drive winding 10. The other ends of resistors 20 and 21 are connected together to one end of a resistor 28, the cathode of a thyristor 29, one end of a series circuit including resistors 30 and 31, and one end of a capacitor 32 in a base current control circuit 27. The anode of the thyristor 29 and the other ends of the resistors 28 and 30 are connected together to the positive line 16, through the resistor 22. The connection point between the resistors 30 and 31 and the other end of the capacitor 32 are connected together to the control gate terminal of the thyristor 29.

The DC positive line 16 is connected to a positive power source terminal of an inverter stopping circuit 33, through the resistor 22. The stopping circuit 33 has a full-wave rectifier circuit 34 for full-wave rectifying a detected output signal from the detecting winding 11 and the pulsating output thereof is smoothed by a capacitor 35. The positive output of a smoothed DC voltage is supplied to the base of a transistor 38, through a Zener diode 36 and a resistor 37. The anode of the Zener diode 36 is connected to the negative line 19, through a parallel circuit including a capacitor 39 and a resistor 40.

A control circuit 41 for the operation start is provided between the drive circuit 23 and the inverter stopping circuit 33. The control circuit 41 has a resistor 42 connected between the positive output terminal of the rectifier circuit 34 and the cathode of the Zener diode 36, and a transistor 43 which is connected at the emitter between the resistor 42 and the Zener diode 36, at the collector to the negative line through a resistor 44, and at the base to one end of the resistor 22 through a resistor 45.

With such an arrangement, immediately after the power switch 1a is turned on either of the transistors 17 and 18 receives base current through resistors 22, 28, 20 and 21 and becomes conductive. Then the transistors 17 and 18 become conductive alternately as is well known to generate at the output transformer an AC output voltage of 20 to 50 KHz, for example. At this starting time, the capacitor 32 contained in the base current control circuit 27 is not charged and the thyristor 29 is nonconductive. Accordingly, the base currents of the transistors 17 and 18 are fed through the high resistance resistor 28, and the resistors 20 and 21 from the drive circuit 23, so that these transistors can not operate normally but operate like class A amplifiers. The voltages developed in the primary winding 5 and the drive winding 10 are substantially low. As a result, the base potential of the transistor 43 is lower than the emitter potential thereof and the transistor is in an ON state. The detected voltage in the inverter stopping circuit 33 is divided by the resistors 42 and 44 and never exceeds a Zener voltage across the Zener diode 36. In this way, through the operation of the control circuit 41, an erroneous operation of the inverter stopping circuit 33 at the start of the lamp operation can reliably be prevented. At this time, though the discharge lamp 13 as a load is preheated, no sufficient voltage for the start of the lamp operation is supplied and the lamp 13 is not operated.

After the lapse of a given time following turning-on of the power switch 1a, a sufficient amount of charge is stored in the capacitor 32. Thus, a gate control signal is supplied to the gate terminal of the thyristor 29 thereby to render the thyristor conductive. As the result of the thyristor conduction, the resistor 28 is short-circuited, so that a sufficient current is supplied to the bases of the transistors 17 and 18, and the transistors 17 and 18 normally perform their switching. Then, the voltage across the primary winding 5 takes its normal value, and the output level of the drive circuit 23 becomes also high. As a result, the base
potential of the transistor 43 is higher than the
emitter potential thereof and the transistor 43 becomes
in an OFF state to start the load lamp 13. The lamp
starting period (so-called as a soft-start period) in
this case is set to be less than 2 seconds, for example.
With this, the detected voltage in the inverter stopping
circuit 33 falls to its normal value i.e. a value corresponding to the lamp operation voltage in this embodiment.

Under this condition, as is mentioned above, the
transistor 43 is in an OFF state and then when an abnormal voltage is detected in the detecting coil 11 as the
end of the lifetime of the discharge lamp 13 approaches,
the inverter stopping circuit 33 operates normally.
When the end of the lifetime of the discharge lamp 13
approaches, the discharge current flows through the
discharge lamp 13 only unidirectionally. For this
reason, the magnetic flux in the core of the output
transformer 12 is one-sided. An abnormal voltage caused
by the one-sided magnetization is detected by the
detecting coil 11 and the Zener diode 36 is conductive,
and the transistor 38 turns on. By the turning on of
the transistor 36, the output terminals of the drive
circuit 23 are short-circuited and the base current of
the transistors 17 and 18 are interrupted and are turned
OFF to forcibly stop the operation of the inverter.

For the details of the inverter stopping circuit
33, reference is made to the U.S. Patent Application
filed on December 28, 1981 based on Japanese Patent
Application No. 186081/1980.

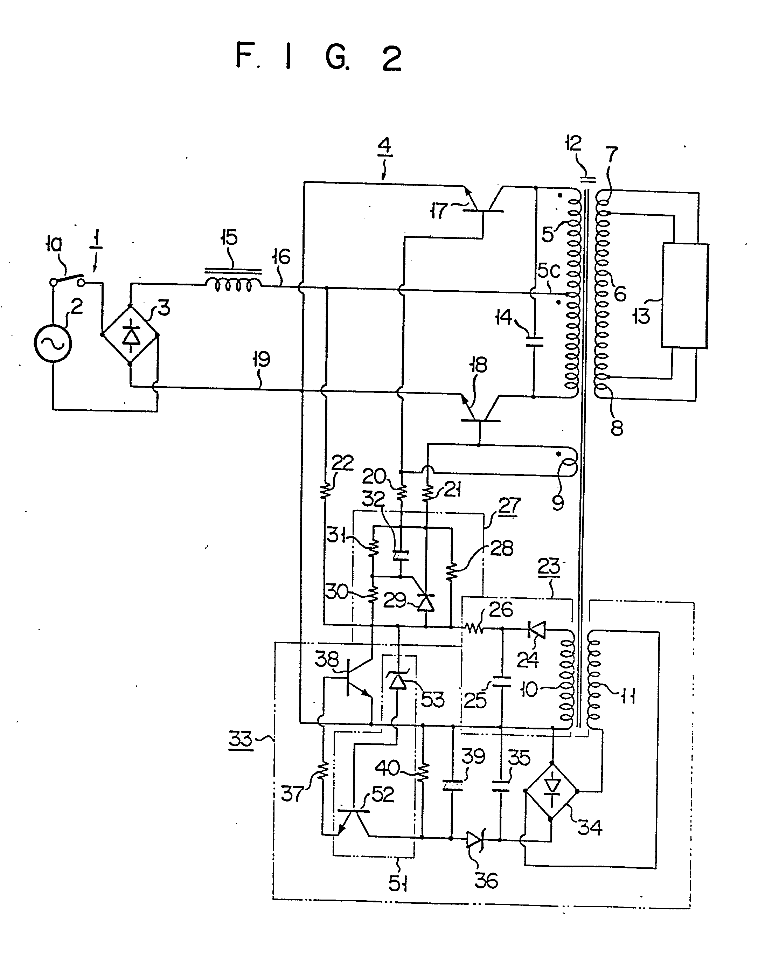

Another embodiment of a transistor inverter device
according to the present invention will be described
referring to Fig. 2. To avoid duplication of description, the similar portions in Fig. 1 are denoted by the
like or similar reference symbols. The embodiment of
Fig. 2 does not use the control circuit 41 in Fig. 1, and employs another control circuit 51 for the start of the lamp operation. The circuit 51 is provided with a transistor 52 of which the collector-emitter path is connected between the anode of the Zener diode 36 and one end of a resistor 37, and a Zener diode 53 which is connected at the anode to the base of the transistor 52 and at the cathode to one end of a resistor 26 at the positive output side of the drive circuit 23.

When the base current control circuit 27 is operating after the power switch 1a is turned on, the output signal from the drive circuit 23 is small, the Zener diode 53 is nonconductive, and the transistor 52 is also in an OFF state. Accordingly, the path between the base circuit of the transistor 38 and the Zener diode 36 is also open even if the Zener diode 36 is ON, and the inverter stopping current 33 never erroneously operates.

After a prescribed time following turn on of the power switch 1a, the thyristor 29 becomes conductive and the transistor 52 is ON. Therefore, the inverter stopping circuit 33 is ready for its normal operation.

In the above-mentioned embodiment, it is easy to fabricate the base current control circuit 27 and the inverter stopping circuit 33 into a single IC chip. It should be understood that the transistor inverter device is applicable not only for the discharge lamp operating device but also for any other various devices.

As a modification of the base current control circuit as mentioned above, the output of the drive circuit 23 may be short-circuited for a given period of time. The drive circuit 23, although not essential to the present invention, may be modified such that the base current is supplied from the power source section 1 to the bases of the transistors 17 and 18. In this case, the control circuit 41·is made to respond to the output of the inverter device 4 by additionally providing a winding in the output transformer 12.

Claims:

1. A transistor inverter device having a power source section (1), an inverter device (4) for producing a high frequency output through the switching operation of a transistor (17, 18) in response to an output signal from said power source section (1), a base current control circuit (27) for limiting a base current fed to said transistor (17, 18) during a predetermined period of time after the start of said inverter device (4), and an inverter stopping circuit (33) for stopping the operation of said inverter device upon detection of an abnormality in the output of said inverter device (4), characterized in that the device further comprises a control circuit (41, 51) for stopping the operation of said inverter stopping circuit (33) for a given period of time after the start of said inverter device (4) in response to the output from said inverter device (4).

2. A transistor inverter device according to claim 1, characterized in that said control circuit (41) includes a transistor (43) to be made conductive by an output from said inverter device (4) at the time of the operation of said base current control circuit (27), said output being lower than that in a normal state, a voltage dividing circuit (42, 43) operable when said transistor (43) is conductive, and means for treating the output signal from said voltage dividing circuit (42, 48) as an abnormal detecting signal of said inverter stopping circuit (33).

3. A transistor inverter device according to claim 1, characterized in that said inverter stopping circuit (33) includes means (11) for detecting an output from said inverter device (4), a full-wave rectifier (34) for rectifying the detected output, a Zener diode (36) supplied with output from said full-wave rectifier (34), and means (38) for stopping the operation of said inverter device (4) in response to the output signal from said Zener diode (36), and said control circuit (41) includes a first resistor (42) connected between one output terminal of said full-wave rectifier (34) and said Zener diode (36), a transistor (43) with an emitter-collector path and a second resistor (44), both being connected to a junction point between said first resistor (42) and said Zener diode (36) in series, and means (23, 45) for applying a DC voltage corresponding to the output of said inverter device (4) to the base of said transistor (43).

4. A transistor inverter device according to claim 1, characterized in that said inverter stopping circuit (33) includes means (11) for detecting the output of said inverter device (4), a full-wave rectifier (34) for rectifying the detected output, a first Zener diode (36) supplied with the output voltage from said full-wave rectifier (34), and means (38) for stopping the operation of said inverter device (4) in response to the output signal from said first Zener diode (36), and said control circuit (51) includes a transistor (52) with an emitter-collector path connected between said first Zener diode (36) and said operation stopping means (38), a second Zener diode (53) connected to the base circuit of said transistor (52), and means (23) for applying a DC voltage corresponding to the output from said inverter device (4) to said second Zener diode (53).

# F I G. 1

# F. I G. 2